# EUROPEAN PATENT SPECIFICATION

(11) **EP 3 507 669 B1**
(45) Date of publication and mention of the grant of the patent: **26.01.2022**
(21) Application number: 17755549.7
(22) Date of filing: 29.08.2017
(51) Int. Cl.: G05D 16/10

(54) **COMPACT AND PRESSURE COMPENSATED GAS PRESSURE REGULATOR**
KOMPAKTER UND DRUCKAUSGEGLICHENER GASDRUCKREGLER
RÉGULATEUR DE PRESSION DE GAZ COMPACT ET À COMPENSATION DE PRESSION

(30) Priority: 31.08.2016 LU 93187
(43) Date of publication of application: 10.07.2019
(73) Proprietor: ROTAREX S.A., 7440 Lintgen (LU)
(72) Inventor: SELEN, Stephan, 66693 Wehingen (DE); SCHMITZ, Philippe, 7303 Steinsel (LU)
(74) Representative: Lecomte & Partners
(86) International application number: PCT/EP2017/071638
(87) International publication number: WO 2018/041819

(56) References cited:
- WO-A2-2009/046714
- JP-A- S61 214 012

## Description

### Technical field

The invention is directed to the field of gas pressure regulators, notably for industrial gases and more particularly for fuel gases compressed at more than 200 bar, like compressed natural gas (CNG).

### Background art

Prior art patent document published WO 2009/046714A2 discloses a gas pressure regulator according to the preamble of claim 1. The chamber housing the spring and delimiting a chamber opposed to the regulating chamber is vented via a side passage in the cap portion of the body. Due to its exposure, that passage can lead to fouling of the chamber.

Prior art patent document published US 2004/0187929 A1 discloses a gas pressure regulator comprising, essentially, a body and a piston. The piston comprises a main portion and a tubular portion that extends from the main portion. The tubular portion comprises a distal edge that cooperates with a seat housed in the body for regulating the flow section and thereby the outlet pressure. The gas under pressure flows through the reduced flow section provided between the seat and the edge of the tubular portion, and through the tubular portion until a regulating chamber delimited by a face of the piston that is opposed to the tubular portion. A spring is provided around the tubular portion, resting on the body and on the piston, urging the piston and thereby the tubular portion away from the seat. When the outlet pressure in the regulating chamber increases, the piston is moved towards the seat, resulting in a decrease of the flow section between the seat and the regulating edge. This decrease of the flow section reduces the pressure of the gas downstream. The regulating edge of the tubular portion is wedge-shaped and shows a diameter that is about the same as the outer diameter of the tubular portion, in order to avoid any interference of the inlet pressure on the regulation process. The tubular portion is relatively long since it has to accommodate the above mentioned spring. The length of the tubular portion is also disadvantageous in that it can cause whistling sound while the gas is flowing, similarly as in a wind instrument where vibrations are generated by a throttle gap. These vibrations form an audible stationary wave with a specific frequency related to the constant diameter and the length of the tube.

Prior art patent document published US 2004/0007269 A1 discloses also a gas pressure regulator. The regulator comprises a piston that cooperates in a gas tight fashion with a tubular portion of the body. The tubular portion is in direct connection with the inlet. The body comprises a central shaft portion on a cap portion of the body, said central shaft portion carrying a seat. The piston comprises a shoulder portion with an edge that cooperates with the seat for varying the flow section and thereby the outlet pressure. This regulator is interesting in that it is pressure compensated, i.e. its regulation is essentially independent of the inlet pressure. Its construction implies however high manufacturing costs, essentially in view of the tubular portion that is integral with the body and the central shaft portion that is integral with the cover portion. The tolerance chain between the seat and the piston is large and imposes therefore a reduced tolerances for each part of the chain, leading to a higher production cost. Also due to the construction of the regulator, the pre-setting of the regulator spring is rendered difficult. The outlet and inlet are arranged at opposed ends of the regulator, meaning that the regulator requires an important room along its longitudinal axis.

### Summary of invention

### Technical Problem

The invention has for technical problem to overcome at least one drawback of the above cited prior art.

### Technical solution

The invention is directed to a gas pressure regulator comprising a body with a gas inlet, a gas outlet and a passage fluidly interconnecting said inlet with said outlet; a piston with a main portion and a tubular portion, said tubular portion being sealingly and slidably housed in the body and forming a portion of the passage in said body; a valve seat in the body, said seat being configured to cooperate with a regulating edge of the tubular portion of the piston for varying a flow section of the passage depending on the gas pressure in a regulating chamber delimited by the piston and downstream of said seat; wherein the tubular portion traverses the main portion of the piston and the regulating edge of said tubular portion is on a downstream side of said portion; the body comprises a central shaft portion carrying the valve seat, the piston being sealingly slidable around said portion; and the central shaft portion comprises a venting channel for a chamber that is delimited by the side of the piston that is opposed to the regulating chamber.

Advantageously, the regulator comprises a spring that urges the regulating edge away from the seat. The spring is on a side of the piston that is opposed to the regulating chamber.

According to a preferred embodiment, the regulating chamber is delimited by a side of the piston that is opposed to the regulating edge of the tubular portion.

According to a preferred embodiment, the main portion of the piston comprises at least one channel interconnecting both sides of said piston.

According to a preferred embodiment, the regulating chamber extends on both sides of the piston, said chamber having an effective section on the side of the piston that is opposed to the regulating edge of the tubular portion, so that the piston moves the regulating edge towards the seat when the pressure in said chamber increases.

According to a preferred embodiment, the gas outlet is located on a side of the piston that is opposed to the regulating edge of the tubular portion.

According to a preferred embodiment, the passage comprises at least one portion interconnecting the regulating chamber with the outlet, said at least one interconnecting portion extending in parallel to the tubular portion.

According to a preferred embodiment, the venting channel comprises a central longitudinal portion and a lateral radial portion, a filter being housed in said central longitudinal portion.

According to a preferred embodiment, the body comprises a main portion and a cap portion mounted, preferably by a threaded engagement, on said main portion and housing the piston.

The regulating chamber can be delimited by a first gas tight barrier between the piston and the body and a second gas tight barrier between said piston and said chamber. The first barrier can be between the piston and the cap portion of the body. The second barrier can be between the piston and the central shaft portion.

According to a preferred embodiment, the main body comprises a bore receiving the cap portion.

According to a preferred embodiment, the bore of the main body comprises a central longitudinal opening receiving the tubular portion of the piston and at least one lateral longitudinal opening forming a portion of the passage, said portion interconnecting the regulating chamber with the outlet.

According to a preferred embodiment, the regulator comprises a valve on an end of the body main portion that is opposed to the cap portion, said valve being fluidly connected between the regulating chamber and the outlet, said valve being preferably an electromagnetic proportional valve.

According to a preferred embodiment, the cap portion carries the central shaft portion, said central shaft portion being preferably screwed on said cap portion. This arrangement provides advantages for the adjustment of the regulator.

According to a preferred embodiment, the regulating edge of the tubular portion has a wedged cross-section with a diameter that corresponds to the outer diameter of said tubular portion. The outer diameter of the tubular portion is advantageously constant over its whole length.

According to a preferred embodiment, the seat has a cavity-shaped surface for contacting the regulating edge of the tubular portion. The cavity-shaped surface can be dome-shaped.

### Advantages of the invention

The invention is particularly interesting in that the regulator provides a simple, efficient and compact construction. Indeed, the piston can provide a pressure compensated configuration and still feature a reduced length compared with classical pressure reducer with a piston and a tubular portion (as in US 2004/0187929 A1). In view of its configuration, a spring for compensating the force on the piston exerted by the gas in the regulating chamber is positioned on the side of the piston that is opposite to said chamber. This means that the regulating chamber can be of reduced height. In addition, the assembly of the different parts of the regulator is particularly simplified. The machining of the parts is also simplified in particular on the main part of the body. Also, there is no variable printing effect on the seat due to a lower tolerance chain.

### Brief description of the drawings

Figure 1 is a perspective illustration of a gas pressure regulator according to the invention.
Figure 2 is a longitudinal cross-sectional view of the gas pressure regulator of figure 1.

### Description of an embodiment

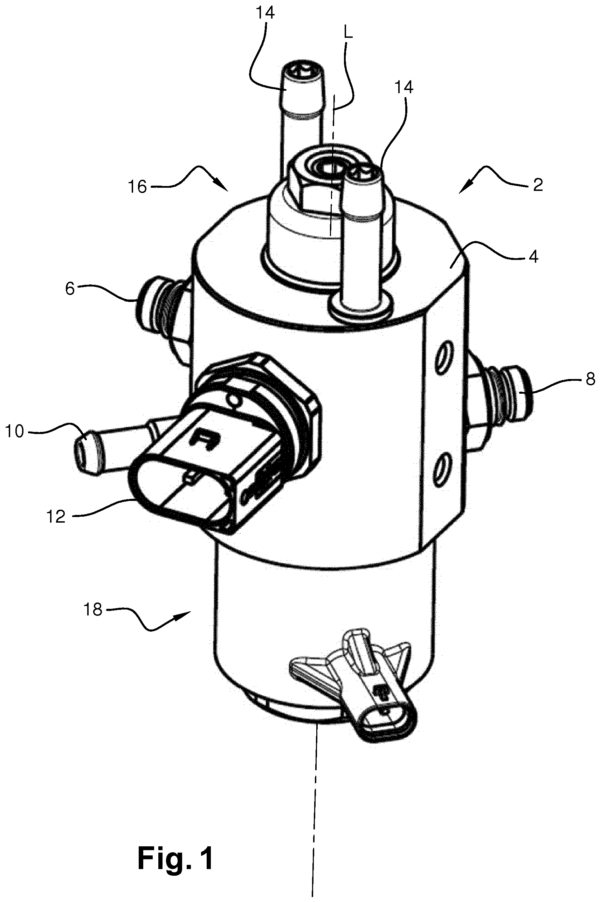

Figure 1 illustrate in perspective a gas pressure regulator 2 according to an embodiment of the invention.

The regulator 2 is a two stages regulator for compressed natural gas (CNG) at 200-250 bar. The invention will be described in relation with that regulator being however understood that the invention does not necessarily need to be implemented in a two stages regulator and also not necessarily for CNG.

The regulator 2 comprises a body 4 that is made of metal like aluminium, stainless steel or brass. The body 4 comprises a gas inlet 6, a gas outlet 8 and a gas passage (inside the body, not visible in figure 1) interconnecting said inlet and outlet. The regulator 2 can also comprise a fluid connector 10 to the exhaust of a pressure relief valve (inside the body, not visible) at the outlet. It can also comprise a pressure sensor or detector, with an electronic connector 12, at the inlet and/or outlet. The regulator 2 can also comprise two connectors 14 for a heating circuit.

In thermodynamics, the Joule-Thomson effect (also known as the Joule-Kelvin effect, Kelvin-Joule effect, or Joule-Thomson expansion) describes the temperature change of a real gas or liquid (as differentiated from an ideal gas) when it is forced through a valve or porous plug while kept insulated so that no heat is exchanged with the environment. Consequently some gases like CNG (contrary to hydrogen or helium) will cool sufficiently to cause freezing when expanding from high pressures. A solution to this problem is to heat the gas in the regulator by means of a heating circuit.

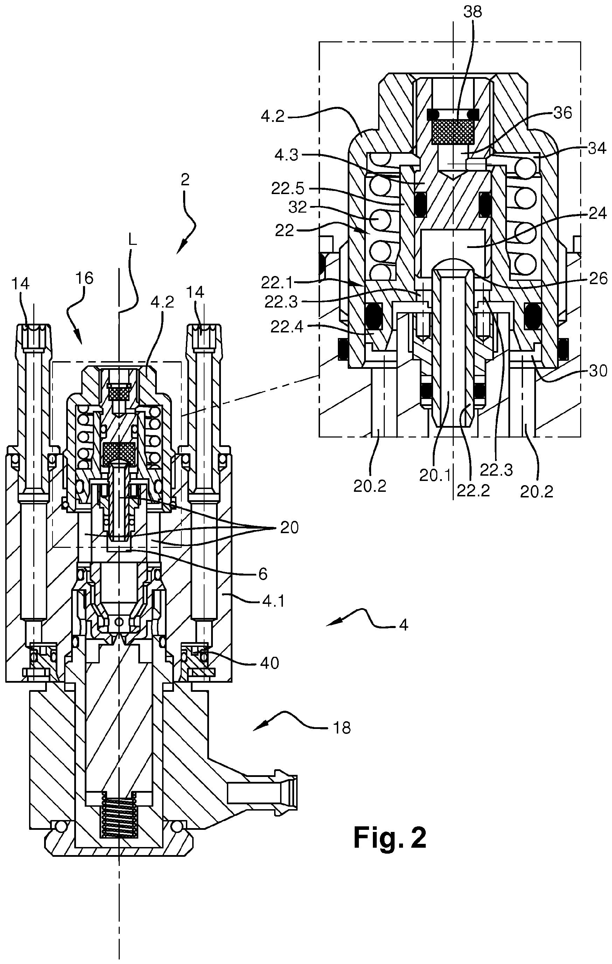

One of the fluid connectors 10 is an inlet and the other is an outlet for a heating fluid like the cooling liquid of the combustion engine of a vehicle that is equipped with CNG storage tank(s). The heating chamber inside the regulator 2 will be described more in details in relation with figure 2.

As is visible in figure 1, the regulator is a two stage regulator with a first mechanical stage 16 (pressure reducer) and a second electromechanical stage 18 (proportional valve) that is fluidly downstream of the first stage 16. The pressure at the outlet is therefore variable and depends on energisation of the coil of the electromechanical stage.

Figure 2 is a cross-sectional view of the regulator of figure 1 along a plane that passes along the longitudinal axis L of the regulator. The first stage pressure reducer comprises a piston that is slidably housed in a cavity formed by a cap portion 4.2 of the body 4. The cap portion 4.2 is mounted on a main portion 4.1 of said body, preferably by a threaded engagement. The piston 22 comprises a main portion 22.1 and a tubular portion 22.2 that extends longitudinally and centrally from the main portion 22.1. The tubular portion 22.2 extends through the body in a gas tight fashion in fluid connection with the inlet 6. The gas under pressure at the inlet 6 flows therefore through the tubular portion 22.2 until the valve seat 24 on which said tubular portion 22.2 rests. More specifically, the end of the tubular portion 22.2 that is in vis-à-vis of the seat 24 forms an edge 26, preferably a wedge-shaped edge 26. The edge 26 is configured for contacting the seat 24 in order to reduce in a regulated manner the pressure at the outlet.

For instance, the wedge-shaped edge 26 has a mean diameter that is close or equal to the external diameter of the tubular portion 22.2. This means that the high pressure at the inlet that is exerted on the annular section of the opposite end of the tubular portion 22.2 is compensated by the same pressure exerted on the annular section of the end that comprises the edge 26.

For instance, the seat 24 has a cavity-shaped surface that is contacted by the edge 26 of the tubular portion 22.2. This shape provides an increased gas tightness in that the contact pressure with the edge 26 is higher for a given closing force. It also provides a self-centring effect for the tubular portion 22.2.

The valve seat 24 is housed in a cavity formed on a central shaft portion 4.3 of the body 4, said portion being rigidly linked with the cap portion 4.2 of the body 4. The central shaft portion 4.3 is advantageously mounted on the cap portion 4.2, e.g. by a threaded engagement. This provides an important advantage for the adjustment of the regulator.

The piston 22, more specifically the main portion 22.1 of the piston, delimits with the body 4 a regulating chamber 30. This chamber communicates with the valve seat 24 and the edge 26 via one or several channels 22.3 in the main portion 22.1. The main portion 22.1 comprises a lower and wider area 22.4 that is in a slidable and gas tight contact with the inner surface of the cap portion 4.2 of the body 4. To that end, the area 22.4 can comprise a circular groove on its external surface, and a gasket housed in said groove, the gasket being in contact with the inner surface of the cap portion 4.2 of the body 4. The main portion 22.1 comprises also a higher and thinner sleeve area 22.5 that circumvents the central shaft portion 4.3 in a slidable and gas tight manner. The central shaft portion 4.3 can comprise on its external surface a circular groove housing a gasket. The regulating chamber 30 extends therefore longitudinally from the lower gas barrier formed by the gasket in the area 22.4 until the upper gas barrier formed by the gasket in the area 22.5, through the channels 22.3. The regulating chamber 30 features an effective annular surface that produces an effort on the piston 22 oriented towards the cap portion 4.2 of the body 4 when a pressure in said chamber is generated. This is typically the case when the regulator is in service and outputs a flow of gas at a given outlet pressure. The outlet pressure corresponds essentially to the pressure in the regulating chamber 30, and this pressure produces an effort against the biasing force of the spring 32.

The regulating chamber 30 is in direct fluid contact with the gas passage portions 20.2 which interconnect the chamber 30 with the outlet, for instance via the second stage valve 18. As this is apparent in figure 2, the cap portion 4.2 is inserted into a bore formed in the main portion 4.1 of the body 4. Also, the central hole and the gas passage portions 20.2 are formed directly in the bottom of the bore the main portion of the body.

Still with reference to figure 2, the piston 22 delimits with the cap portion 4.2 of the body 4 a second chamber 34 that is in permanent fluid connection with the outside via the venting channel 36 and the filter 38.

An electromagnetic proportional valve 18 is mounted on the main portion 4.1 of the body 4, on a side of said body portion that is opposed to the above describe mechanical pressure reducer 16. The outlet pressure of the first stage mechanical pressure reducer 16 can be comprised between 10 and 30 bar whereas the outlet pressure of the reducer second stage electromechanical proportional valve 18 can be comprised between 3 and 10 bar. The construction of the proportional valve 18 is as such well known from the skilled person and does not therefore be detailed.

Still with reference to figure 2, the regulator 2 comprises a heating circuit for heating the gas while being expanded. To that end the two connectors 14 are in fluid connection with a heating chamber or passage 40 formed in the body 4. The heat provided in that chamber 40 by means of the heating circuit is transferred by conduction to the main body 4.1 and therefore to the gas expanded by the first stage pressure reducer and flowing to the second stage.

## Claims

1. Gas pressure regulator (2) comprising
- a body (4) with a gas inlet (6), a gas outlet (8) and a passage (20) fluidly interconnecting said inlet with said outlet;
- a piston (22) with a main portion (22.1) and a tubular portion (22.2), said tubular portion being sealingly and slidably housed in the body (4) and forming a portion (20.1) of the passage in said body;
- a valve seat (24) in the body (4), said seat being configured to cooperate with a regulating edge (26) of the tubular portion (22.2) of the piston (22) for varying a flow section of the passage depending on the gas pressure in a regulating chamber (30) delimited by the piston (22) and downstream of said seat (24);
wherein the tubular portion (22.2) traverses the main portion (22.1) of the piston (22) and the regulating edge (26) of said tubular portion (22.2) is on a downstream side of said tubular portion; and
the body (4) comprises a central shaft portion (4.3) carrying the valve seat (24), the piston (22) being sealingly slidable around said central shaft portion;
**characterized in that**
the central shaft portion (4.3) comprises a venting channel (36) for a chamber (34) that is delimited by the side of the piston (22) that is opposed to the regulating chamber (30).

2. Gas pressure regulator (2) according to claim 1, wherein the regulating chamber (30) is delimited by a side of the piston (22) that is opposed to the regulating edge (26) of the tubular portion (22.2).

3. Gas pressure regulator (2) according to claim 2, wherein the main portion (22.1) of the piston (22) comprises at least one channel (22.3) interconnecting both sides of said piston.

4. Gas pressure regulator (2) according to claim 3, wherein the regulating chamber (30) extends on both sides of the piston (22), said chamber having an effective section on the side of the piston that is opposed to the regulating edge (26) of the tubular portion (22.2), so that the piston (22) moves the regulating edge (26) towards the seat (24) when the pressure in said chamber increases.

5. Gas pressure regulator (2) according to any one of claims 1 to 4, wherein the gas outlet (8) is located on a side of the piston (22) that is opposed to the regulating edge (26) of the tubular portion (22.2).

6. Gas pressure regulator (2) according to any one of claims 1 to 5, wherein the passage (20) comprises at least one portion (20.2) interconnecting the regulating chamber (30) with the outlet (8), said at least one interconnecting portion (20.2) extending in parallel to the tubular portion (22.2).

7. Gas pressure regulator (2) according to any one of claims 1 to 6, wherein the venting channel (36) comprises a central longitudinal portion and a lateral radial portion, a filter (38) being housed in said central longitudinal portion.

8. Gas pressure regulator (2) according to any one of claims 1 to 7, wherein the body (4) comprises a main portion (4.1) and a cap portion (4.2) mounted, preferably by a threaded engagement, on said main portion and housing the piston (22).

9. Gas pressure regulator (2) according to claim 8, wherein the main portion of the body (4.1) comprises a bore receiving the cap portion (4.2).

10. Gas pressure regulator (2) according to claim 9, wherein the bore of the main body (4.1) comprises a central longitudinal opening receiving the tubular portion (22.2) of the piston (22) and at least one lateral longitudinal opening forming a portion (20.2) of the passage, said portion (20.2) interconnecting the regulating chamber (30) with the outlet (8).

11. Gas pressure regulator (2) according to any one of claims 8 to 10, wherein said regulator comprises a valve (18) on an end of the body main portion (4.1) that his opposed to the cap portion (4.2), said valve being fluidly connected between the regulating chamber (30) and the outlet (8), said valve being preferably an electromagnetic proportional valve (18).

12. Gas pressure regulator (2) according to any one of claims 8 to 11, to 12, wherein the cap portion (4.2) carries the central shaft portion (4.3), said central shaft portion being preferably screwed on said cap portion.

13. Gas pressure regulator (2) according to any one of claims 1 to 12, wherein the regulating edge (26) of the tubular portion (22.2) has a wedged cross-section with a diameter that corresponds to the outer diameter of said tubular portion.

14. Gas pressure regulator (2) according to any one of claims 1 to 13, wherein the seat (24) has a cavity-shaped surface for contacting the regulating edge (26) of the tubular portion (22.2).

## Patentansprüche

1. Gasdruckregler (2) bestehend aus
- einen Körper (4) mit einem Gaseinlass (6), einem Gasauslass (8) und einem Durchgang (20), der den Einlass mit dem Auslass in Fluidverbindung bringt;
- einen Kolben (22) mit einem Hauptteil (22.1) und einem rohrförmigen Teil (22.2), wobei der rohrförmige Teil abdichtend und gleitend in dem Körper (4) untergebracht ist und einen Teil (20.1) des Durchgangs in dem Körper bildet;
- einen Ventilsitz (24) in dem Körper (4), wobei der Ventilsitz so konfiguriert ist, dass er mit einer Regulierungskante (26) des rohrförmigen Teils (22.2) des Kolbens (22) zusammenwirkt, um einen Durchflussquerschnitt des Durchgangs in Abhängigkeit von dem Gasdruck in einer Regulierungskammer (30) zu verändern, die durch den Kolben (22) und stromabwärts des Ventilsitzes (24) begrenzt ist;
wobei der rohrförmige Teil (22.2) den Hauptteil (22.1) des Kolbens (22) durchquert und die Regulierungskante (26) des rohrförmigen Teils (22.2) auf einer stromabwärtigen Seite des rohrförmigen Teils liegt; und
der Körper (4) einen zentralen Schaftteil (4.3) umfasst, der den Ventilsitz (24) trägt, wobei der Kolben (22) abdichtend und gleitend um den zentralen Schaftteil herum angeordnet ist;
**dadurch gekennzeichnet, dass**
der zentrale Schaftteil (4.3) einen Entlüftungskanal (36) für eine Kammer (34) aufweist, die von der Seite des Kolbens (22) begrenzt wird, die der Regulierungskammer (30) gegenüberliegt.

2. Gasdruckregler (2) nach Anspruch 1, wobei die Regulierungskammer (30) durch eine Seite des Kolbens (22) begrenzt ist, die der Regelkante (26) des rohrförmigen Teils (22.2) gegenüberliegt.

3. Gasdruckregler (2) nach Anspruch 2, wobei der Hauptteil (22.1) des Kolbens (22) mindestens einen Kanal (22.3) aufweist, der beide Seiten des Kolbens miteinander verbindet.

4. Gasdruckregler (2) nach Anspruch 3, bei dem sich die Regulierungskammer (30) auf beiden Seiten des Kolbens (22) erstreckt, wobei die besagte Kammer einen wirksamen Abschnitt auf der Seite des Kolbens aufweist, die der Regelkante (26) des rohrförmigen Teils (22.2) gegenüberliegt, so dass der Kolben (22) die Regelkante (26) in Richtung des Ventilsitzes (24) bewegt, wenn der Druck in der Kammer steigt.

5. Gasdruckregler (2) nach einem der Ansprüche 1 bis 4, wobei der Gasauslass (8) auf einer Seite des Kolbens (22) angeordnet ist, die der Regelkante (26) des rohrförmigen Teils (22.2) gegenüberliegt.

6. Gasdruckregler (2) nach einem der Ansprüche 1 bis 5, wobei der Durchgang (20) mindestens einen Abschnitt (20.2) aufweist, der die Regulierungskammer (30) mit dem Gasauslass (8) verbindet, wobei der mindestens eine Verbindungsabschnitt (20.2) parallel zum rohrförmigen Teil (22) verläuft.

7. Gasdruckregler (2) nach einem der Ansprüche 1 bis 6, bei dem der Entlüftungskanal (36) einen zentralen Längsabschnitt und einen seitlichen radialen Abschnitt aufweist, wobei in dem zentralen Längsabschnitt ein Filter (38) untergebracht ist.

8. Gasdruckregler (2) nach einem der Ansprüche 1 bis 7, wobei der Körper (4) einen Hauptteil (4.1) und einen Kappenteil (4.2) umfasst, der vorzugsweise durch ein Gewinde an dem Hauptteil angebracht ist und den Kolben (22) aufnimmt.

9. Gasdruckregler (2) nach Anspruch 8, wobei der Hauptteil des Körpers (4.1) eine Bohrung zur Aufnahme des Kappenteils (4.2) aufweist.

10. Gasdruckregler (2) nach Anspruch 9, wobei die Bohrung des Hauptteils des Körpers (4.1) eine zentrale Längsöffnung, die den rohrförmigen Teil (22.2) des Kolbens (22) aufnimmt, und mindestens eine seitliche Längsöffnung aufweist, die einen Abschnitt (20.2) des Durchgangs bildet, wobei der Abschnitt (20.2) die Regulierungskammer (30) mit dem Gasauslass (8) verbindet.

11. Gasdruckregler (2) nach einem der Ansprüche 8 bis 10, wobei der Gasdruckregler an einem dem Kappenteil (4.2) gegenüberliegenden Ende des Hauptteils des Körpers (4.1) ein Ventil (18) aufweist, das strömungstechnisch zwischen der Regulierungskammer (30) und dem Gasauslass (8) angeschlossen ist, wobei das Ventil vorzugsweise ein elektromagnetisches Proportionalventil (18) ist.

12. Gasdruckregler (2) nach einem der Ansprüche 8 bis 11, bei dem der Kappenteil (4.2) den zentralen Schaftteil (4.3) trägt, wobei der zentrale Schaftteil vorzugsweise auf dem Kappenteil geschraubt ist.

13. Gasdruckregler (2) nach einem der Ansprüche 1 bis 12, wobei die Regelkante (26) des rohrförmigen Teils (22.2) einen keilförmigen Querschnitt aufweist, dessen Durchmesser dem Außendurchmesser des rohrförmigen Teils entspricht.

14. Gasdruckregler (2) nach einem der Ansprüche 1 bis 13, wobei der Sitz (24) eine hohlraumförmige Fläche zur Anlage an der Regelkante (26) des rohrförmigen Teils (22.2) aufweist

## Revendications

1. Régulateur de pression de gaz (2), comprenant
- un corps (4) avec une entrée de gaz (6), une sortie de gaz (8) et un passage (20) reliant de manière fluidique ladite entrée à ladite sortie;
- un piston (22) avec une partie principale (22.1) et une partie tubulaire (22.2), ladite partie tubulaire étant étanche et logée de manière coulissante dans le corps (4) et formant une partie (20.1) du passage dans ledit corps;
- un siège de vanne (24) dans le corps (4), ledit siège étant configuré pour coopérer avec une arête de régulation (26) de la partie tubulaire (22.2) du piston (22) pour faire varier une section d'écoulement du passage en fonction de la pression du gaz dans une chambre de régulation (30) délimitée par le piston (22) et en aval dudit siège (24);
dans lequel la partie tubulaire (22.2) traverse la partie principale (22.1) du piston (22) et l'arête de régulation (26) de ladite partie tubulaire (22.2) se trouve sur un côté aval de ladite partie tubulaire ; et
dans lequel le corps (4) comprend une partie d'axe central (4.3) portant le siège de vanne (24), le piston (22) étant monté coulissant de manière étanche autour de ladite partie d'axe central ;
**caractérisé en ce que**
la partie d'axe central (4.3) comprend un canal d'évacuation (36) pour une chambre (34) qui est délimitée par la face du piston (22) qui est opposée à la chambre de régulation (30).

2. Régulateur de pression de gaz (2) selon la revendication 1, dans lequel la chambre de régulation (30) est délimitée par une face du piston (22) qui est opposée à l'arête de régulation (26) de la partie tubulaire (22.2).

3. Régulateur de pression de gaz (2) selon la revendication 2, dans lequel la partie principale (22.1) du piston (22) comprend au moins un canal (22.3) reliant les deux faces dudit piston.

4. Régulateur de pression de gaz (2) selon la revendication 3, dans lequel la chambre de régulation (30) se prolonge des deux côtés du piston (22), ladite chambre ayant une section efficace du côté du piston qui est opposé à l'arête de régulation (26) de la partie tubulaire (22.2), de sorte que le piston (22) déplace l'arête de régulation (26) en direction du siège (24) lorsque la pression augmente dans ladite chambre.

5. Régulateur de pression 5 de gaz (2) selon l'une quelconque des revendications 1 à 4, dans lequel la sortie de gaz (8) est située sur un côté du piston (22) qui est opposé à l'arête de régulation (26) de la partie tubulaire (22.2).

6. Régulateur de pression de gaz (2) selon l'une quelconque des revendications 1 à 5, dans lequel le passage (20) comprend au moins une partie (20.2) qui relie la chambre de régulation (30) avec la sortie (8), ladite ou lesdites parties (20.2) se prolongeant parallèlement à la partie tubulaire (22.2).

7. Régulateur de pression de gaz (2) selon l'une quelconque des revendications 1 à 6, dans lequel le canal d'évacuation (36) comprend une partie longitudinale centrale et une partie latérale radiale, un filtre (38) étant logé dans ladite partie longitudinale centrale.

8. Régulateur de pression de gaz (2) selon l'une quelconque des revendications 1 à 7, dans lequel le corps (4) comprend une partie principale (4.1) et une partie en forme de couvercle (4.2) montée, de préférence par un engagement par vissage, sur ladite partie principale et logeant le piston (22).

9. Régulateur de pression de gaz (2) selon la revendication 8, dans lequel la partie principale du corps (4.1) comporte un alésage recevant la partie en forme de couvercle (4.2).

10. Régulateur de pression de gaz (2) selon la revendication 9, dans lequel l'alésage du corps principal (4.1) comprend une ouverture longitudinale centrale recevant la partie tubulaire (22.2) du piston (22) et au moins une ouverture longitudinale latérale formant une partie (20.2) du passage, ladite partie (20.2) reliant la chambre de régulation (30) avec la sortie (8).

11. Régulateur de pression de gaz (2) selon l'une quelconque des revendications 8 à 10, dans lequel ledit régulateur comprend une vanne (18) sur une extrémité de la partie principale du corps (4.1) qui est opposée à la partie en forme de couvercle (4,2), ladite vanne étant reliée de manière fluidique entre la chambre de régulation (30) et la sortie (8), ladite vanne étant de préférence une vanne électromagnétique proportionnelle (18).

12. Régulateur de pression de gaz (2) selon l'une quelconque des revendications 8 à 11, dans lequel la partie en forme de couvercle (4.2) porte la partie d'axe central (4.3), ladite partie d'axe central étant de préférence vissée sur ladite partie en forme de couvercle.

13. Régulateur de pression de gaz (2) selon l'une quelconque des revendications 1 à 12, dans lequel l'arête de régulation (26) de la partie tubulaire (22.2) présente une section transversale biseautée avec un diamètre qui correspond au diamètre extérieur de ladite partie tubulaire.

14. Régulateur de pression de gaz (2) selon l'une quelconque des revendications 1 à 13, dans lequel le siège (24) présente une surface en forme de cavité pour entrer en contact avec l'arête de régulation (26) de la partie tubulaire (22.2).
